(19) Europäisches Patentamt
European Patent Office
Office européen des brevets

(11) **EP 3 387 798 B1**

(12) **EUROPÄISCHE PATENTSCHRIFT**

(45) Veröffentlichungstag und Bekanntmachung des Hinweises auf die Patenterteilung:
**28.08.2019  Patentblatt 2019/35**

(21) Anmeldenummer: **16808603.1**

(22) Anmeldetag: **06.12.2016**

(51) Int Cl.:
***H04L 12/40*** *(2006.01)*

(86) Internationale Anmeldenummer:
**PCT/EP2016/079829**

(87) Internationale Veröffentlichungsnummer:
**WO 2017/097734 (15.06.2017 Gazette 2017/24)**

(54) **BUSANORDNUNG MIT TEILNEHMER MIT SICHERHEITS-ADRESSE UND VERFAHREN ZUM BETREIBEN EINER BUSANORDNUNG**

BUS ARRANGEMENT WITH A SUBSCRIBER WITH SECURITY ADDRESS AND METHOD FOR OPERATING A BUS ARRANGEMENT

SYSTÈME DE BUS COMPRENANT UN ABONNÉ DISPOSANT D'UNE ADRESSE DE SÉCURITÉ ET PROCÉDÉ DE FONCTIONNEMENT D'UN SYSTÈME DE BUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2015   DE 102015121291**

(43) Veröffentlichungstag der Anmeldung:
**17.10.2018   Patentblatt 2018/42**

(73) Patentinhaber: **Eaton Intelligent Power Limited**
**Dublin 4 (IE)**

(72) Erfinder:
• **HANSING, Matthias**
  **53604 Bad Honnef (DE)**
• **HELLER, Franz**
  **53757 Sankt Augustin (DE)**
• **THIESSMEIER, Peter**
  **53343 Wachtberg (DE)**

(74) Vertreter: **Eaton IP Group**
**EMEA**
**c/o Eaton Industries Manufacturing GmbH**
**Route de la Longeraie 7**
**1110 Morges (CH)**

(56) Entgegenhaltungen:
EP-A1- 2 782 294          EP-A2- 2 804 063
DE-A1-102014 206 989      DE-A1-102014 207 389

**Beschreibung**

Die vorliegende Erfindung betrifft eine Busanordnung mit einem Teilnehmer mit einer Sicherheits-Adresse und ein Verfahren zum Betreiben einer Busanordnung.

Eine Busanordnung kann beispielsweise in der Automatisierungstechnik eingesetzt werden. Eine Busanordnung weist typisch einen Koordinator und mehrere Teilnehmer auf. Die Teilnehmer können als Aktoren oder Sensoren realisiert sein. Die Aktoren können Schaltgeräte wie Schütze, Motorstarter und Leistungsschalter, Befehlsgeräte und Frequenzumrichter sein. Bei sicherheitskritischen Prozessen werden ein Sicherheitsteilnehmer und ein Sicherheitskoordinator eingesetzt, die häufig eine Sicherheits-Adresse verwenden. Die Sicherheits-Adresse kann beispielsweise mit Dual In-Line Package Schaltern, abgekürzt DIP Schalter, manuell eingestellt werden.

Dokument EP 2782294 A1 beschreibt eine Informationsverarbeitungsvorrichtung und ein Verfahren zur Erzeugung von Kopplungsinformationen. Die Verarbeitungsvorrichtung erfasst erste Daten, die eine Korrespondenzbeziehung zwischen einer ersten Adresse, die einem ersten Adapter von einer ersten Einrichtung gegeben ist, und einer ersten Bus-Zahl anzeigen, die einem ersten mit dem ersten Adapter gekoppelten Bus gegeben ist. Weiter erfasst die Verarbeitungsvorrichtung zweite Daten, die eine Korrespondenzbeziehung zwischen einer zweiten Adresse, die einem zweiten Adapter von einer ersten Einrichtung gegeben ist, und einer zweiten Bus-Zahl anzeigen, die einem zweiten mit dem zweiten Adapter gekoppelten Bus gegeben ist. Weiter erfasst die Verarbeitungsvorrichtung dritte Daten, die eine Korrespondenzbeziehung zwischen der ersten Adresse und einer Port-Zahl anzeigen, die einem Port einer zweiten Einrichtung gegeben ist. Dabei ist der Port an den ersten Adapter mit dem ersten Bus gekoppelt. Wenn die zweite Bus-Zahl mit der ersten Bus-Zahl identisch ist, werden vierte Daten erzeugt, die anzeigen, dass der zweite Adapter an den Port gekoppelt ist.

Eine Aufgabe der vorliegenden Erfindung ist es, eine Busanordnung mit einem Teilnehmer mit einer Sicherheits-Adresse und ein Verfahren zum Betreiben einer Busanordnung bereitzustellen, bei denen die Sicherheits-Adresse ohne manuelle Betätigung von Schaltern gebildet wird.

Die Aufgabe wird mit den Gegenständen der unabhängigen Patentansprüche gelöst. Weiterbildungen und Ausgestaltungen sind jeweils Gegenstand der abhängigen Ansprüche.

In einer Ausführungsform umfasst eine Busanordnung einen Koordinator mit einer Koordinator-Adresse, einen ersten Teilnehmer mit einer ersten Teilnehmer-Adresse und einen Bus, der den Koordinator mit dem ersten Teilnehmer koppelt. Der erste Teilnehmer ist ausgelegt, in einer Konfigurationsphase ein Informationstelegramm vom Koordinator zu empfangen, dem Informationstelegramm die Koordinator-Adresse zu entnehmen und eine Sicherheits-Adresse als Funktion der ersten Teilnehmer-Adresse und der Koordinator-Adresse zu bilden und abzuspeichern.

Mit Vorteil bildet der erste Teilnehmer die Sicherheits-Adresse ohne Verwendung von DIP Schaltern oder anderen Hardware-Einstellmöglichkeiten, die manuell zu bedienen sind.

In einer Ausführungsform ist der erste Teilnehmer als Sicherheits-Teilnehmer realisiert.

In einer Ausführungsform ist der Koordinator als Sicherheits- Koordinator implementiert. Die Koordinator-Adresse kann eine Feldbus-Adresse des Koordinators sein.

In einer Ausführungsform ist die Sicherheits-Adresse aus der Adresse der Quelle und der Adresse des Ziels einer sicheren Verbindung gebildet. Die sichere Verbindung ist als Punkt-zu-Punkt Verbindung realisiert. Der erste Teilnehmer und der Koordinator stellen das Ziel und die Quelle und damit die Endpunkte der Punkt-zu-Punkt Verbindung dar.

In einer Ausführungsform bestimmt der erste Teilnehmer die Sicherheits-Adresse dadurch, dass der erste Teilnehmer die Koordinator-Adresse mit einem vorgegebenen Wert M multipliziert und zu dem Produkt die erste Teilnehmer-Adresse addiert, oder dass der erste Teilnehmer die erste Teilnehmer-Adresse mit einem vorgegebenen Wert N multipliziert und zu dem Produkt die Koordinator-Adresse addiert.

In einer Ausführungsform ist der vorgegebene Wert M größer als der größte Wert, den die erste Teilnehmer-Adresse annehmen kann. Entsprechend ist der vorgegebene Wert N größer als der größte Wert, den die Koordinator-Adresse annehmen kann. Somit ist der vorgegebene Wert M außerhalb des Adressbereichs der Teilnehmer-Adressen. Ferner ist der vorgegebene Wert N außerhalb des Adressbereichs der Koordinator-Adressen und damit der Feldbus-Teilnehmer-Adressen.

Mit Vorteil ist somit die Sicherheits-Adresse in der Busanordnung eindeutig. Sie wird für genau eine Verbindung eines Teilnehmers und eines Koordinators verwendet. Keine Kombination der Teilnehmer-Adresse eines anderen Teilnehmers und der Koordinator-Adresse des Koordinators oder eines anderen Koordinators ergibt die Sicherheits-Adresse des ersten Teilnehmers.

In einer Ausführungsform bildet ebenfalls der Koordinator in der Konfigurationsphase die Sicherheits-Adresse als Funktion der ersten Teilnehmer-Adresse und der Koordinator-Adresse und speichert die Sicherheits-Adresse ab. Dabei ist die vom Koordinator verwendete Funktion identisch zu der vom ersten Teilnehmer verwendeten Funktion.

Mit Vorteil können der Koordinator und der erste Teilnehmer die identische Sicherheits-Adresse selbständig und unabhängig voneinander bilden.

In einer Ausführungsform ist im Koordinator die Koordinator-Adresse in einem nicht-flüchtigen semi-permanenten Speicher oder in einem flüchtigen Speicher des Koordinators gespeichert.

In einer Ausführungsform ist im Koordinator die Sicherheits-Adresse im nicht-flüchtigen semi-permanenten oder im flüchtigen Speicher des Koordinators gespeichert. Ist die Sicherheits-Adresse im nicht-flüchtigen semi-permanenten Speicher gespeichert, ist diese remanent im Koordinator gespeichert.

In einer Ausführungsform ist im ersten Teilnehmer die Sicherheits-Adresse in einem ersten flüchtigen oder einem ersten nicht-flüchtigen semi-permanenten Speicher des ersten Teilnehmers gespeichert. Im ersten nicht-flüchtigen semi-permanenten Speicher des ersten Teilnehmers ist die Sicherheits-Adresse remanent gespeichert.

In einer Ausführungsform ist der vorgegebene Wert M beziehungsweise der vorgegebene Wert M im ersten nicht-flüchtigen semi-permanenten Speicher oder einem ersten nicht-flüchtigen permanenten Speicher des ersten Teilnehmers und im nicht-flüchtigen semi-permanenten Speicher oder in einem nicht-flüchtigen permanenten Speicher des Koordinators gespeichert.

In einer Ausführungsform ist im ersten nicht-flüchtigen permanenten Speicher des ersten Teilnehmers eine erste Seriennummer gespeichert. Der Koordinator nimmt in der Konfigurationsphase eine Verbindung zum ersten Teilnehmer auf, fragt die erste Seriennummer ab und speichert diese im nicht-flüchtigen semi-permanenten Speicher des Koordinators.

In einer Ausführungsform überträgt der Koordinator im Informationstelegramm auch die erste Seriennummer. Der erste Teilnehmer vergleicht die im Informationstelegramm übertragene erste Seriennummer mit der im ersten nicht-flüchtigen permanenten Speicher gespeicherten ersten Seriennummer. Erst nach Feststellung der Übereinstimmung bildet der erste Teilnehmer die Sicherheits-Adresse.

In einer Ausführungsform umfasst die Busanordnung einen zweiten Teilnehmer.

In einer Ausführungsform weist der zweite Teilnehmer eine zweite Seriennummer auf. Der Bus koppelt den Koordinator mit dem ersten und dem zweiten Teilnehmer. Der Koordinator nimmt in der Konfigurationsphase eine Verbindung zum zweiten Teilnehmer auf, fragt die zweite Seriennummer ab und speichert diese im nicht-flüchtigen semi-permanenten Speicher. Somit speichert der nicht-flüchtige semi-permanente Speicher des Koordinators auch bei einer Unterbrechung einer Stromversorgung des Koordinators die erste und die zweite Seriennummer weiter.

In einer Weiterbildung vergleicht der Koordinator die im nicht-flüchtigen semi-permanenten Speicher gespeicherte erste Seriennummer mit der im nicht-flüchtigen semi-permanenten Speicher gespeicherten zweiten Seriennummer. Der Koordinator stellt ein Signal in Abhängigkeit des Vergleichsergebnisses bereit. Das Signal repräsentiert somit die Information, ob die zwei Seriennummern identisch sind. Bei identischen Seriennummern liegt ein Fehlerfall vor.

Weiter weist der zweite Teilnehmer einen zweiten nicht-flüchtigen permanenten Speicher auf, in dem die zweite Seriennummer gespeichert ist. Mit Vorteil weisen der erste und der zweite Teilnehmer einzigartige Seriennummern auf. Da sich der erste Teilnehmer vom zweiten Teilnehmer anhand der jeweiligen Seriennummer unterscheidet, ist eine Adressierung der Teilnehmer über die Seriennummer möglich. Die erste Seriennummer ist eine global einzigartige Nummer, die während des Produktionsprozesses des ersten Teilnehmers im ersten Teilnehmer gespeichert wird. Entsprechend ist auch die zweite Seriennummer eine einzigartige Nummer, die während des Produktionsprozesses des zweiten Teilnehmers im zweiten Teilnehmer gespeichert wird.

Der erste und der zweite nicht-flüchtige permanente Speicher der Teilnehmer und der nicht-flüchtige permanente Speicher des Koordinators können beispielsweise Speicher wie etwa ein Read Only Memory, abgekürzt ROM, ein Programmable Read Only Memory, abgekürzt PROM, oder ein One Time Programmable Baustein, kurz OTP Baustein, sein.

Der erste und der zweite nicht-flüchtige semi-permanente Speicher der Teilnehmer und der nicht-flüchtige semi-permanente Speicher des Koordinators können beispielsweise Speicher wie etwa ein Electrically Erasable Programmable Read Only Memory, abgekürzt EEPROM, oder ein Flash-EEPROM sein. Der erste und der zweite nicht-flüchtige semi-permanente Speicher der Teilnehmer und der nicht-flüchtige semi-permanente Speicher des Koordinators verlieren ihren Speicherinhalt in einer Ausschaltphase nicht.

Der erste und der zweite flüchtige Speicher der Teilnehmer und der flüchtige Speicher des Koordinators können beispielsweise als Random Access Memory, abgekürzt RAM, oder Flash-Speicher implementiert sein. Das RAM kann etwa als Dynamic Random Access Memory, abgekürzt DRAM, oder Static Random Access Memory, abgekürzt SRAM, realisiert sein. Der erste und der zweite flüchtige Speicher und der flüchtige Speicher des Koordinators verlieren in der Ausschaltphase ihren Speicherinhalt.

In einer Ausführungsform umfasst der Bus eine erste Signalleitung, die den ersten Teilnehmer und den Koordinator koppelt, und mindestens eine Busleitung, die den Koordinator an den ersten Teilnehmer anschließt. Der Koordinator aktiviert in der Konfigurationsphase über die erste Signalleitung den ersten Teilnehmer und sendet über die mindestens eine Busleitung ein Telegramm, das die erste Teilnehmer-Adresse enthält.

In einer Ausführungsform speichert der erste Teilnehmer die erste Teilnehmer-Adresse im ersten flüchtigen Speicher des ersten Teilnehmers. Dadurch, dass genau ein Teilnehmer aktiviert ist, nämlich der erste Teilnehmer, speichert ausschließlich dieser Teilnehmer die über die mindestens eine Busleitung bereitgestellte Teilnehmer-Adresse.

Ein derartiges über die Busleitung an alle Teilnehmer abgesandtes Telegramm kann auch als Broadcast-Nachricht bezeichnet werden. Da der erste Teilnehmer die erste Teilnehmer-Adresse nunmehr in der Betriebsphase, die von der Konfigurationsphase eingeleitet wurde, weiter im ersten flüchtigen Speicher speichert, kann er mittels der ersten Teilnehmer-Adresse adressiert werden. Die Aktivierung des ersten Teilnehmers kann direkt vom Koordinator erfolgen oder, falls weitere Teilnehmer zwischen dem Koordinator und dem ersten Teilnehmer angeordnet sind, über den dem ersten Teilnehmer vorangehenden Teilnehmer.

In einer Ausführungsform ist der erste Teilnehmer zwischen dem Koordinator und dem zweiten Teilnehmer am Bus angeordnet. Der zweite Teilnehmer kann nachfolgend zum ersten Teilnehmer am Bus angeschlossen sein.

In einer Ausführungsform umfasst der Bus umfasst eine zweite Signalleitung, die den zweiten Teilnehmer an den ersten Teilnehmer anschließt. Die mindestens eine Busleitung schließt den Koordinator an den ersten und den zweiten Teilnehmer an. Der erste Teilnehmer aktiviert in der Konfigurationsphase über die zweite Signalleitung den zweiten Teilnehmer. Der Koordinator sendet über die mindestens eine Busleitung ein Telegramm, das die zweite Teilnehmer-Adresse enthält, an den ersten und den zweiten Teilnehmer.

In einer Ausführungsform speichert der zweite Teilnehmer die zweite Teilnehmer-Adresse in einem zweiten flüchtigen Speicher des zweiten Teilnehmers. Da im Zeitraum, in dem das Telegramm mit der zweiten Teilnehmer-Adresse gesendet wird, ausschließlich der zweite Teilnehmer aktiviert ist, übernimmt ausschließlich der zweite Teilnehmer die zweite Teilnehmer-Adresse in seinen flüchtigen Speicher.

In einer Ausführungsform bilden der Koordinator und die Teilnehmer eine Reihenschaltung oder Kette, die als Daisy-Chain bezeichnet werden kann. Somit bilden der Koordinator und die Teilnehmer eine Daisy-Chain-Anordnung oder einen Daisy-Chain-Bus. Der Koordinator und die Teilnehmer sind seriell über die Signalleitungen verbunden. Der erste Teilnehmer kann direkt an den Koordinator angeschlossen sein. Die weiteren Teilnehmer sind jeweils an ihre Vorgänger angeschlossen.

In einer Ausführungsform ist die Konfigurationsphase Teil einer Betriebsphase. Auf die Betriebsphase folgen eine Ausschaltphase und dann eine weitere Betriebsphase, welche mit einer Wiederanlaufphase beginnt. Im weiteren Verlauf können sich weitere Betriebsphasen, die jeweils zu Anfang eine Wiederanlaufphase aufweisen, und Ausschaltphasen abwechseln. Somit folgt die Wiederanlaufphase der Konfigurationsphase.

In einer Ausführungsform nimmt der Koordinator in einer Wiederanlaufphase, die der Konfigurationsphase folgt, eine Verbindung zum ersten Teilnehmer auf, fragt die erste Seriennummer ab und vergleicht die abgefragte erste Seriennummer mit der im nicht-flüchtigen semi-permanenten Speicher gespeicherten ersten Seriennummer. Der Koordinator stellt ein Signal bereit, wenn die zwei Seriennummern voneinander abweichen. Mit Vorteil kann somit der Koordinator feststellen, ob beispielsweise in der Ausschaltphase vor der Wiederanlaufphase der erste Teilnehmer ausgetauscht wurde. Mit diesem Signal kann somit der Koordinator den Betreiber der Busanordnung oder eine der Busanordnung übergeordnete Steuerung informieren, dass der erste Teilnehmer ausgetauscht worden ist. Bei abweichenden ersten Seriennummern kann ein Fehlerfall vorliegen.

In einer Ausführungsform schließt die erste Signalleitung den ersten Teilnehmer an den Koordinator an. Der erste Teilnehmer und der Koordinator sind somit direkt und permanent über die erste Signalleitung aneinander angeschlossen.

In einer Ausführungsform ist der zweite Teilnehmer direkt und permanent über die zweite Signalleitung an den ersten Teilnehmer angeschlossen. Der zweite Teilnehmer ist nicht direkt an die erste Signalleitung angeschlossen. Der zweite Teilnehmer ist ausschließlich über den ersten Teilnehmer mit der ersten Signalleitung gekoppelt. Entsprechend ist der Koordinator nicht direkt an die zweite Signalleitung angeschlossen. Der Koordinator ist über den ersten Teilnehmer mit der zweiten Signalleitung gekoppelt.

An die mindestens eine Busleitung ist sowohl der Koordinator wie auch der erste Teilnehmer als auch der zweite Teilnehmer direkt angeschlossen.

In einer Ausführungsform ist die mindestens eine Busleitung des Busses als genau eine Busleitung realisiert.

In einer alternativen Ausführungsform weist der Bus die mindestens eine Busleitung sowie eine weitere Busleitung auf. Somit weist der Bus genau zwei Busleitungen, nämlich eine erste und eine zweite Busleitung, auf. Die erste und die zweite Busleitung können gemäß dem Schnittstellen-Standard TIA/EIA-485 A, auch EIA-485 oder RS-485 bezeichnet, betrieben werden.

In einer Ausführungsform umfasst die Busanordnung einen oder mehrere weitere Teilnehmer, die an die mindestens eine Busleitung angeschlossen sind. Ein weiterer Teilnehmer kann über eine dritte Signalleitung an den zweiten Teilnehmer angeschlossen sein. Der oder die weiteren Teilnehmer können jedoch auch beispielsweise zwischen dem Koordinator und dem ersten Teilnehmer angeordnet sein.

In einer Ausführungsform ist der erste Teilnehmer und falls vorhanden auch der zweite Teilnehmer als eine konfigurierbare und/oder parametrisierbare Funktionseinheit realisiert. Eine Funktionseinheit umfasst eine physikalische Baueinheit und einen Programmbaustein, der die Baueinheit steuert oder Daten der Baueinheit speichert.

In einer Ausführungsform ist mindestens einer der Teilnehmer als Aktor, Messgerät oder Sensor realisiert. Der Aktor kann ein Schaltgerät - wie ein Schütz, ein Motorstarter oder ein Leistungsschalter -, ein Stellgerät, ein Befehlsgerät, ein Meldegerät, ein Bediengerät oder ein Frequenzumrichter sein.

In einer Ausführungsform sendet der Koordinator in einer Betriebsphase, etwa nach der Konfigurationsphase oder nach der Wiederanlaufphase, über die mindestens eine Busleitung ein Telegramm, das wahlweise die erste Teilnehmer-Adresse oder die erste Seriennummer sowie Daten enthält, an alle Teilnehmer und somit auch an den ersten und den zweiten Teilnehmer. Der erste Teilnehmer erkennt die erste Teilnehmer-Adresse und die erste Seriennummer, sodass der erste Teilnehmer die Daten im Telegramm verarbeitet. Der erste Teilnehmer kann somit durch ein Telegramm, das ausschließlich die erste Teilnehmer-Adresse sowie Daten enthält, angesprochen werden wie auch durch ein Telegramm, das ausschließlich die erste Seriennummer sowie Daten enthält. Der erste Teilnehmer kann somit auf zweierlei Art und Weise über die mindestens eine Busleitung adressiert werden. Zusätzlich kann der erste Teilnehmer auch über die erste Signalleitung aktiviert werden. Auch der zweite und die weiteren Teilnehmer können die zweite Teilnehmer-Adresse und die zweite Seriennummer beziehungsweise die weiteren Teilnehmer-Adressen und die weiteren Seriennummern erkennen, sodass der zweite beziehungsweise weitere Teilnehmer die Daten im Telegramm verarbeitet.

In einer Ausführungsform umfasst ein Verfahren zum Betreiben einer Busanordnung folgende Schritte: In einer Konfigurationsphase sendet der Koordinator ein Informationstelegramm an den ersten Teilnehmer. Der erste Teilnehmer empfängt das Informationstelegramms und entnimmt dem Informationstelegramm eine Koordinator-Adresse des Koordinators. Weiter in der Konfigurationsphase bildet der erste Teilnehmer eine Sicherheits-Adresse als Funktion einer ersten Teilnehmer-Adresse des ersten Teilnehmers und der Koordinator-Adresse und speichert die Sicherheits-Adresse ab. Ein Bus koppelt den Koordinator mit dem ersten Teilnehmer.

Mit Vorteil bildet der erste Teilnehmer sehr effizient und selbsttätig die Sicherheits-Adresse.

Die Busanordnung beziehungsweise das Verfahren führen eine automatische Generierung einer systemweiten, eindeutigen Kommunikations-Identität oder Kommunikations-Identitätsadresse durch. Die Kommunikations-Identität oder Kommunikations-Identitätsadresse kann auch als Sicherheits-Adresse bezeichnet werden. So wird eine eindeutige Kommunikations-Identität innerhalb eines Sicherheitssystems für Busteilnehmer mit funktionaler Sicherheit vergeben.

Die automatische Generierung einer eindeutigen Endpunkt-Identität erfolgt auf Basis einer Busadresse und einer eindeutigen Hardware Seriennummer. Dies geschieht, ohne dass ein zusätzliches Adressierungswerkzeug wie beispielsweise Adressschalter oder ein Parametrierungs-Werkzeug benötigt werden. Um einen Adressierungsfehler auszuschließen, werden Hardware Seriennummern im Gateway, das heißt im Koordinator, und in den Teilnehmern zusätzlich überprüft.

Sicherheits-Teilnehmer, auch Safety Teilnehmer genannt, verwenden eine eindeutige Sicherheits-Adresse, auch sichere Endpunkts-Adresse oder Safety Endpoint Adresse genannt, in den sicheren Teilnehmern zur Erkennung von Adressfehlern. Diese muss einerseits systemweit eindeutig sein und andererseits mit dem im Parametersatz der Verbindung projektierten Wert übereinstimmen, damit der Sicherheitsbetrieb gestartet werden darf.

Die eindeutigen Sicherheits-Adressen werden in den Teilnehmern wie folgt gebildet: Der nach Power Up vorliegende Initialwert, etwa die Hexadezimalzahl 0xFFFF (entspricht der Dezimalzahl 65535), der Sicherheits-Adresse ist ungültig. Nachdem eine Read_Configuration.rsp (response) gesendet wurde und mittels gültigem Empfang der Information_Report.ind (indication) mit Index=100 der Wert der Koordinator-Identität festliegt, wird die Sicherheits-Adresse gebildet. Die Koordinator-Identität entspricht der Koordinator-Adresse.

Beim Empfang des Information-Reports prüft der Sicherheits-Teilnehmer die empfangene Hardware Seriennummer auf Übereinstimmung mit seiner eigenen Seriennummer ab, damit die Vergabe der Sicherheits-Adresse auch eindeutig ist. Sind die Seriennummern identisch, multipliziert er die empfangene Koordinator-Adresse mit dem Wert von beispielsweise 100 und addiert die eigene Teilnehmer-Adresse (z. B. von 1-99) hinzu. Mit diesem Ergebnis kann er dann seine Sicherheits-Adresse bilden. Der Wertebereich für die Sicherheits-Adressen läuft damit von 1 bis 12599 (1<Koordinator-Adresse<126, 201-12599).

Die Koordinator-Adresse und damit eine Komponente der Sicherheits-Adressen-Generierung werden unabhängig vom Parametertelegramm (Write_Configuration.req (request)) übertragen. Die eigene Teilnehmer-Adresse ist im Kontext ebenfalls eindeutig. Es liegt damit eine einfache Regel für die Vergabe der Sicherheits-Adresse im Engineering-System vor (Koordinator-Adresse · 100 + Slot-Nummer). Die Slot-Nummer entspricht der Teilnehmer-Adresse.

Um einen Adressierungsfehler ausschließen zu können, überprüfen Gateway, das heißt Koordinator, und Sicherheits-Teilnehmer die Hardware Seriennummer. Der Koordinator prüft nach einer neuen Einrichtung, englisch Set New, ob auch alle Hardware Seriennummern in der Sollkonfiguration unterschiedlich sind. Eine Doppelbelegung von Hardware Seriennummern bzw. eine mehrfach Adressierung eines Teilnehmers kann darüber erkannt werden. Der Sicherheits-Teilnehmer prüft vor der Berechnung seiner Sicherheits-Adresse, ob die vom Gateway mit dem Informations-Report gesendete Hardware Seriennummer und seine Seriennummer auch übereinstimmen.

Die Busanordnung ermöglicht eine kombinierte Adressierung von Teilnehmern. Die Busanordnung kann auch als Bussystem bezeichnet werden. Ein Austausch von Bussegmenten im Betrieb aufgrund der kombinierten Adressierung ist ermöglicht. Die Busanordnung weist ein Wiederanlaufverfahren auf. Das Wiederanlaufverfahren ist ohne Neuadressierung möglich. Die Busanordnung kann ein Adressierungsverfahren über Daisy-Chain und über die eindeutige Seriennummer durchführen, so dass bei einem Wiederanlauf auch ohne Daisy-Chain eine weitere Adressierung der Teilnehmer möglich ist.

Bei jeder ersten Inbetriebnahme der Busanordnung wird ein Verfahren über Daisy-Chain verwendet. Alle Teilnehmer am Bus werden vom Koordinator mit aufsteigender Adressfolge adressiert. In diesem Verfahren wird von jedem Busteilnehmer eine eindeutige Seriennummer abgefragt, die in einer integrierten Schaltung, die unter anderem die Buskommunikation ausübt, abgespeichert ist. Dabei wird in dieser integrierten Schaltung eine global einzigartige Nummer während des Produktionsprozesses eingespeichert. Die integrierte Schaltung kann als applikationsspezifische integrierte Schaltung, abgekürzt ASIC, realisiert sein. Die integrierte Schaltung kann einen Transceiver und den nicht-flüchtigen permanenten Speicher des Teilnehmers zur Speicherung seiner Seriennummer umfassen. Außerdem wird eine Geräte-Identität (Hersteller, Gerät), englisch (Vendor, Device) ausgelesen, die den Typ des Geräts angibt (z.B. Eaton, Schalter, 200 Ampere, Typ-Nummer). Das Adressierungsverfahren endet am ersten fehlenden Teilnehmer bzw. am letztmöglich zu adressierenden Teilnehmer. Die dazugehörige, eindeutige Seriennummer eines jeden adressierten Teilnehmers wird zusammen mit seiner Teilnehmer-Adresse beim Koordinator remanent gespeichert. Über dieses Verfahren lassen sich Bussegmente abschalten und wieder einschalten. Dabei steht die Daisy-Chain für die geographische Position.

Beispielsweise wird bei einem Wiederanlauf des Koordinators durchgeführt: Die Busteilnehmer werden ohne Daisy-Chain adressiert. Über die Daisy-Chain kann dann die zugehörige eindeutige Hardware Seriennummer, die bei der Erstkonfiguration ermittelt wurde, mit der Remanenten verifiziert werden. Damit ist eine Falschadressierung vermieden. Alle Seriennummern in der Busanordnung werden geprüft, um eine Doppeladressierung zu vermeiden.

Werden ein oder mehrere Teilnehmer nicht erkannt, z.B. durch Unterbrechung der Daisy-Chain (etwa bei fehlendem oder fehlerhaftem Teilnehmer), kann mit der eindeutigen Hardware Seriennummer auch ohne Daisy-Chain die Adressierung fortgesetzt werden. Dies bedeutet, dass jeder Teilnehmer im System eine eindeutige Seriennummer besitzt (diese Seriennummer erhält jeder ASIC in der Herstellung) und bei ausgefallener Signalleitung (a la Daisy Chain) genau über diese Seriennummer dann noch angesprochen werden kann. Dies geschieht in einem Telegramm, welches über das Bussystem übertragen wird, und ausschließlich dieser Teilnehmer kann diese Information für sich nutzen und darauf dann auch reagieren. Alles Weitere wird dann vom Koordinator aus geregelt. Dieses Verfahren wird auch bei Ausfall von Bussegmenten und der Wiederankopplung von Teilnehmern als Option im Betrieb verwendet.

Die Erfindung wird im Folgenden an mehreren Ausführungsbeispielen anhand der Figuren näher erläutert. Funktions- beziehungsweise wirkungsgleiche Komponenten oder Funktionseinheiten tragen gleiche Bezugszeichen. Insoweit sich Komponenten oder Funktionseinheiten in ihrer Funktion entsprechen, wird deren Beschreibung nicht in jeder der folgenden Figuren wiederholt. Es zeigen:

Figur 1      eine beispielhafte Ausführungsform einer Busanordnung,

Figur 2      eine beispielhafte zeitliche Abfolge von Phasen in einer Busanordnung und

Figur 3      eine weitere beispielhafte Ausführungsform einer Busanordnung.

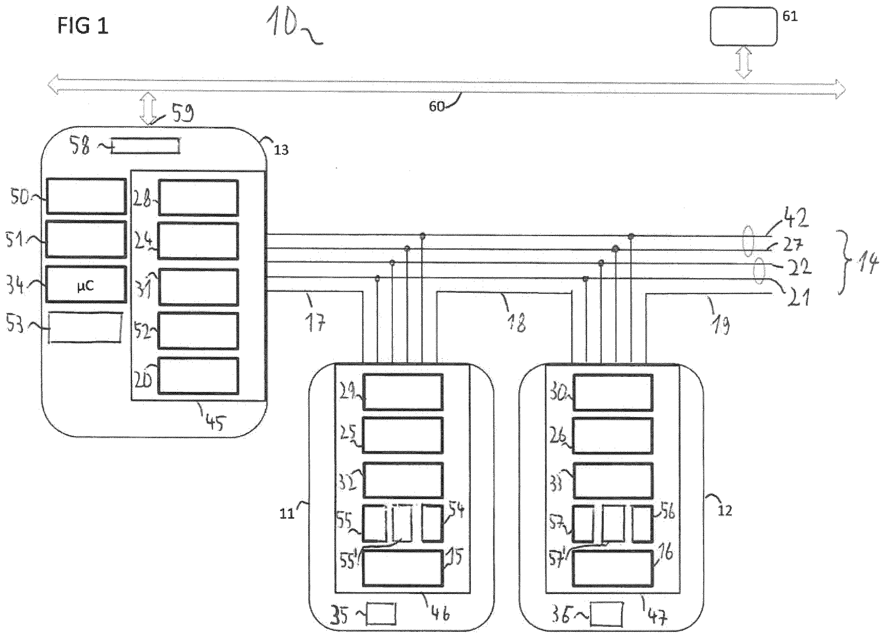

Figur 1 zeigt eine beispielhafte Ausführungsform einer Busanordnung 10, die einen ersten und einen zweiten Teilnehmer 11, 12, einen Koordinator 13 und einen Bus 14 umfasst. Der Koordinator 13 ist mit dem ersten und dem zweiten Teilnehmer 11, 12 über den Bus 14 verbunden. Der erste und der zweite Teilnehmer 11, 12 weisen jeweils einen Prozessorkern 15, 16 auf. Der Bus 14 umfasst eine erste Signalleitung 17, die einen Anschluss des Koordinators 13 mit einem Anschluss des ersten Teilnehmers 11 und damit beispielsweise mit einem Anschluss des Prozessorkerns 15 des ersten Teilnehmers 11 verbindet. Die erste Signalleitung 17 ist nicht direkt an den zweiten oder einen weiteren Teilnehmer 12 angeschlossen. Aus Gründen der Übersichtlichkeit sind die Leitungen im Koordinator 13 und im ersten und zweiten Teilnehmer 11, 12 nicht eingezeichnet.

Weiter umfasst der Bus 14 eine zweite Signalleitung 18, die einen Anschluss des ersten Teilnehmers 11 an einen Anschluss des zweiten Teilnehmers 12 anschließt. Beispielsweise verbindet die zweite Signalleitung 18 den Prozessorkern 15 des ersten Teilnehmers 11 mit dem Prozessorkern 16 des zweiten Teilnehmers 12. Zusätzlich kann der Bus 14 eine dritte Signalleitung 19 umfassen, die einen Anschluss des zweiten Teilnehmers 12 mit einem nicht gezeigten dritten Teilnehmer verbindet. Der Koordinator 13 umfasst einen Prozessorkern 20, der an die erste Signalleitung 17 angeschlossen ist. Der Bus 14 ist als linearer Bus realisiert. Der Bus 14 kann als serieller Bus ausgebildet sein. Der Koordinator 13 kann als Master implementiert sein. Die Teilnehmer 11, 12 können als Slaves oder Devices realisiert sein. Der Prozessorkern 15, 16, 20 kann als Mikroprozessor implementiert sein.

Der Prozessorkern 20 des Koordinators 13 ist über eine Signalleitungsschaltung 31 des Koordinators 13 an die erste Signalleitung 17 angeschlossen. Weiter ist der Prozessorkern 15 des ersten Teilnehmers 11 über eine Signalleitungsschaltung 32 des ersten Teilnehmers 11 an die erste und die zweite Signalleitung 17, 18 angeschlossen. Der Prozessorkern 16 des zweiten Teilnehmers 12 ist über eine Signalleitungsschaltung 33 des zweiten Teilnehmers 12 an die zweite und falls vorhanden auch an die dritte Signalleitung 18, 19 angeschlossen.

Darüber hinaus umfasst der Bus 14 mindestens eine Busleitung 21, die den Koordinator 13 mit allen Teilnehmern und somit mit dem ersten und dem zweiten Teilnehmer 11, 12 verbindet. Ein Signal auf der mindestens einen Busleitung 21 erreicht alle Teilnehmer 11, 12. Der Bus 14 kann eine weitere Busleitung 22 umfassen, die den Koordinator 13 mit allen Teilnehmern 11, 12 verbindet. Die mindestens eine Busleitung 21 und die weitere Busleitung 22 können auch als erste und zweite Busleitung bezeichnet werden. Der Koordinator 13 umfasst einen Transceiver 24, der den Prozessorkern 20 mit der ersten und der zweiten Busleitung 21, 22 koppelt. Der erste und der zweite Teilnehmer 11, 12 umfassen ebenfalls jeweils einen Transceiver 25, 26 mit Anschlüssen, die an die erste und die zweite Busleitung 21, 22 angeschlossen sind. Im ersten und zweiten Teilnehmer 11, 12 ist der Transceiver 25, 26 jeweils mit dem Prozessorkern 15, 16 gekoppelt. Die erste und die zweite Busleitung 21, 22 sowie die Transceiver 24 - 26 des Koordinators 13 und der Teilnehmer 11, 12 können gemäß dem Schnittstellen-Standard RS-485 implementiert sein. Die Transceiver 24 - 26 des Koordinators 13 und der Teilnehmer 11, 12 können als Sende- und Empfangs-Transceiver ausgelegt und für den Halbduplexbetrieb realisiert sein.

Zusätzlich umfasst der Bus 14 eine Versorgungsleitung 27, die eine Spannungsversorgung 28 des Koordinators 13 mit einer Spannungsversorgung 29 des ersten Teilnehmers 11 und einer Spannungsversorgung 30 des zweiten Teilnehmers 12 verbindet. Die Spannungsversorgung 28, 29, 30 kann jeweils als Spannungsregulator realisiert sein.

Weiter kann der erste und der zweite Teilnehmer 11, 12 jeweils eine Applikationseinrichtung 35, 36 aufweisen. Die Applikationseinrichtung 35, 36 kann als Aktor-, Messgeräts- oder Sensor-Einrichtung implementiert sein. Somit können der erste und der zweite Teilnehmer 11, 12 als Aktor, Messgerät und/oder Sensor realisiert sein. Die Applikationseinrichtung 35 des ersten Teilnehmers 11 ist mit dem Prozessorkern 15 des ersten Teilnehmers 11 gekoppelt. Entsprechendes gilt für den zweiten Teilnehmer 12. Ferner umfasst der Bus 14 eine Bezugspotentialleitung 42, die einen Bezugspotentialanschluss des Koordinators 13 mit Bezugspotentialanschlüssen des ersten und des zweiten Teilnehmers 11, 12 verbindet. Die Versorgungsleitung 27 und die Bezugspotentialleitung 42 dienen der Spannungsversorgung der Teilnehmer 11, 12 durch den Koordinator 13.

Darüber hinaus umfasst der Koordinator 13 einen Speicher 53, der mit dem Prozessorkern 20 oder einem Mikrocontroller 34 des Koordinators 13 verbunden ist. Der Speicher 53 kann als nicht-flüchtiger semi-permanenter Speicher realisiert sein. Weiter umfasst der Koordinator 13 einen flüchtigen Speicher 52. Der erste Teilnehmer 11 kann einen ersten flüchtigen Speicher 54, einen ersten nicht-flüchtigen permanenten Speicher 55 und einen ersten nicht-flüchtigen semi-permanenten Speicher 55' umfassen, die an den Transceiver 25 angeschlossen sein können. Der zweite Teilnehmer 12 kann einen zweiten flüchtigen Speicher 56, einen zweiten nicht-flüchtigen permanenten Speicher 57 und einen zweiten nicht-flüchtigen semi-permanenten Speicher 57' umfassen, die an den Transceiver 26 angeschlossen sein können.

Der Koordinator 13 umfasst eine integrierte Schaltung 45, die als ASIC realisiert sein kann. Die integrierte Schaltung 45 kann die Spannungsversorgung 28, den Transceiver 24, die Signalleitungsschaltung 31, den flüchtigen Speicher 52 und den Prozessorkern 20 umfassen. Weiter umfasst der erste und der zweite Teilnehmer 11, 12 jeweils eine integrierte Schaltung 46, 47, die als ASIC realisiert sein kann. Die integrierte Schaltung 46 des ersten Teilnehmers 11 kann die Spannungsversorgung 29, den Transceiver 25, die Signalleitungsschaltung 32, den ersten flüchtigen Speicher 54, den ersten nicht-flüchtigen permanenten Speicher 55 und den Prozessorkern 15 umfassen. Entsprechend kann die integrierte Schaltung 47 des zweiten Teilnehmers 12 die Spannungsversorgung 30, den Transceiver 26, die Signalleitungsschaltung 33, den zweiten flüchtigen Speicher 56, den zweiten nicht-flüchtigen permanenten Speicher 57 und den Prozessorkern 16 aufweisen.

Der Koordinator 13 umfasst einen weiteren Transceiver 58, der einen weiteren Busanschluss 59 des Koordinators 13 mit dem Mikrocontroller 34 koppelt. Weiter umfasst die Busanordnung 10 einen Feldbus 60, der an den weiteren Busanschluss 59 angeschlossen ist. Die Busanordnung 10 weist eine Steuerung 61 auf, die an den Feldbus 60 angeschlossen ist. Der Koordinator 13 kann eine Übergabestelle wie etwa ein Gateway, Router oder Switch sein. Der Koordinator 13 weist einen Oszillator 50 auf. Der Oszillator 50 kann als RC Oszillator ausgeführt sein. Der Oszillator 50 kann zur Zeitsteuerung eingesetzt werden. Der Koordinator 13 kann einen nicht-flüchtigen permanenten Speicher 51 oder einen weiteren flüchtigen Speicher aufweisen.

Der Bus 14 ist als Flachbandkabel oder Rundkabel realisiert. Gemäß Figur 1 kann der Bus 14 z.B. aus fünf Adern bestehen. Alternativ kann der Bus 14 eine andere Anzahl von Adern, z.B. acht Adern, aufweisen.

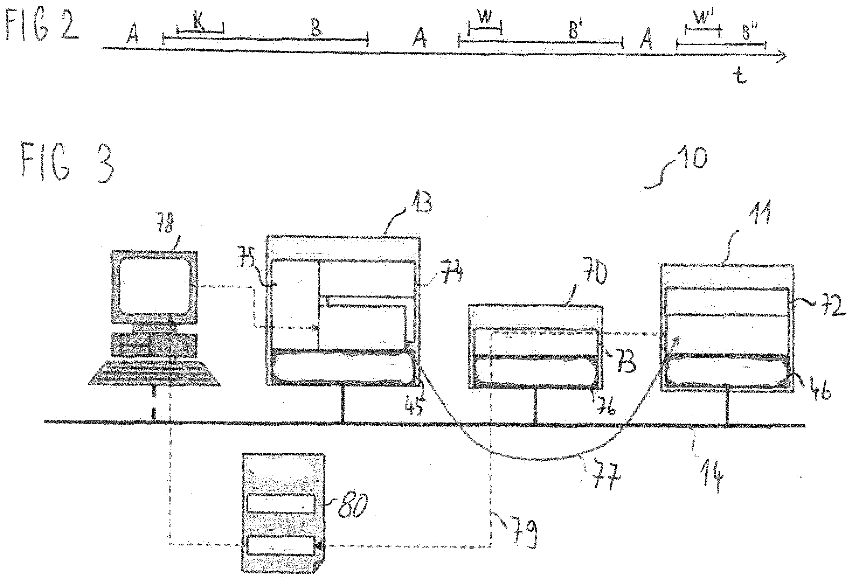

Die Funktionsweise der Busanordnung 10 gemäß Figur 1 wird anhand Figur 2 erläutert.

In einer alternativen Ausführungsform koppelt ein Gateway den Feldbus 60 mit dem Bus 14. Die Steuerung 61 ist als Koordinator implementiert. Eine sichere Verbindung wird zwischen dem Koordinator 61 und dem ersten Teilnehmer 11 realisiert und führt vom Koordinator 61 über den Feldbus 60, den Gateway und den Bus 14 zum ersten Teilnehmer 11. Der Koordinator 61 kann als speicherprogrammierbare Steuerung, englisch Programmable Logic Controller, implementiert sein. Die Sicherheits-Adresse wird aus der Teilnehmer-Adresse des ersten Teilnehmers 11 und der Koordinator-Adresse gebildet, welche eine Feldbus-Adresse des Koordinators 61 am Feldbus 60 ist.

Figur 2 zeigt eine beispielhafte Ausführungsform des zeitlichen Verlaufs der Phasen, die über einer Zeit t aufgetragen sind. Die Konfigurationsphase K wird zu Beginn einer Betriebsphase B durchgeführt. Nach Durchführung der Koordinationsphase K erfolgt in der Betriebsphase B beispielsweise ein regulärer Betrieb der Busanordnung 10.

Nach der Betriebsphase B erfolgt eine Ausschaltphase A. In der Ausschaltphase A sind der Koordinator 13 und die Teilnehmer 11, 12 nicht mit elektrischer Energie versorgt. Auf die Ausschaltphase A folgt eine weitere Betriebsphase B'. Zu Beginn der weiteren Betriebsphase B' wird eine Wiederanlaufphase W durchgeführt. Nach der Wiederanlaufphase W erfolgt in der weiteren Betriebsphase B' der reguläre Betrieb der Busanordnung 10. Auf die weitere Betriebsphase B' können weitere Ausschaltphasen A und weitere Betriebsphasen B" folgen. In den Ausschaltphasen A speichern die Teilnehmer 11, 12 keine Teilnehmeradressen. In der Wiederanlaufphase W führt der Koordinator 13 dieselben Schritte durch, um die Teilnehmer-Adressen den Teilnehmern 11, 12 zuzuordnen wie in der Konfigurationsphase K.

In der Konfigurationsphase K wie auch der Wiederanlaufphase W werden über den Koordinator 13 und mit Hilfe der Daisy-Chain die Teilnehmer 11, 12 beginnend mit dem zum Koordinator 13 am nächsten liegenden Teilnehmer sukzessive adressiert und die geographischen Positionen und damit die Reihenfolge der Teilnehmer 11, 12 festgelegt. In dem in Figur 1 gezeigten Beispiel aktiviert der Koordinator 13 über die erste Signalleitung 17 den ersten Teilnehmer 11. Nach der Aktivierung sendet der Koordinator 13 über die erste und die zweite Busleitung 21, 22 ein Bustelegramm, das eine erste Teilnehmeradresse wie etwa 1 enthält, an alle Teilnehmer 11, 12. Ausschließlich der aktivierte Teilnehmer, nämlich der erste Teilnehmer 11, übernimmt die im Bustelegramm enthaltene erste Teilnehmeradresse in seinen ersten flüchtigen Speicher 54. Die Bustelegramme sind als Broadcast realisiert. Ab diesem Zeitpunkt kann der erste Teilnehmer 11 Bustelegramme mit der zuvor erhaltenen Teilnehmeradresse empfangen.

Im ersten nicht-flüchtigen permanenten Speicher 55 des ersten Teilnehmers 11 ist eine erste Seriennummer gespeichert. Die Seriennummer ist permanent gespeichert. Der Koordinator nimmt in der Konfigurationsphase K eine Verbindung zum ersten Teilnehmer 11 auf, fragt die erste Seriennummer ab und speichert diese im nicht-flüchtigen semi-permanenten Speicher 53 des Koordinators 13.

Der Koordinator 13 hat in seinem nicht-flüchtigen semi-permanenten Speicher 53 oder in seinem nicht-flüchtigen permanenten Speicher 51 eine Koordinator-Adresse gespeichert. In der Konfigurationsphase K sendet der Koordinator 13 dem ersten Teilnehmer 11 ein Informationstelegramm, das die erste Seriennummer und die Koordinator-Adresse umfasst. Der erste Teilnehmer 11 speichert die Koordinator-Adresse im ersten flüchtigen Speicher 54 oder im ersten nicht-flüchtigen semi-permanenten Speicher 55'. Der erste Teilnehmer 11 vergleicht die im Informationstelegramm übertragene erste Seriennummer mit der im ersten nicht-flüchtigen permanenten Speicher 55 gespeicherten ersten Seriennummer. Nach Feststellung der Übereinstimmung bildet der erste Teilnehmer 11 die Sicherheits-Adresse. Bei fehlender Übereinstimmung generiert der erste Teilnehmer 11 keine Sicherheits-Adresse. Der erste Teilnehmer 11 generiert die Sicherheits-Adresse unter Verwendung der Gleichung:

$$\text{Sicherheits-Adresse} = \text{Koordinator-Adresse} \cdot M + \text{erste Teilnehmeradresse,}$$

wobei M ein vorgegebener Wert ist. Der vorgegebene Wert M kann im ersten nicht-flüchtigen semi-permanenten Speicher 55' gespeichert sein. Der erste Teilnehmer 11 speichert die Sicherheits-Adresse im ersten flüchtigen oder ersten nicht-flüchtigen semi-permanenten Speicher 54, 55'.

Der Koordinator 13 berechnet ebenfalls nach obiger Gleichung die Sicherheitsadresse unabhängig vom ersten Teilnehmer 11 und speichert sie im nicht-flüchtigen semi-permanenten Speicher 53 oder im flüchtigen Speicher 52.

In einem weiteren Schritt der Konfigurationsphase K sendet der Koordinator 13 ein Bustelegramm an alle Teilnehmer, das die erste Teilnehmeradresse und den Befehl enthält, die ausgangsseitige Signalleitung, also die zweite Signalleitung 18, zu aktivieren. Der erste Teilnehmer 11 erkennt mittels seines Transceivers 25, dass er angesprochen ist und aktiviert über ein Signal auf der zweiten Signalleitung 18 den zweiten Teilnehmer 12. Anschließend sendet der Koordinator 13 ein Bustelegramm an alle Teilnehmer 11, 12, das die zweite Teilnehmeradresse, z.B. 2, enthält. Da jedoch ausschließlich der zweite Teilnehmer 12 aktiviert ist, übernimmt ausschließlich der zweite Teilnehmer 12 die zweite Teilnehmeradresse in seinen flüchtigen Speicher 56. Die Adressierung führt der Koordinator 13 durch, bis alle Teilnehmer eine Teilnehmeradresse zugewiesen bekommen haben. Nach Abschluss der Konfigurationsphase K ist der Koordinator 13 so konfiguriert, dass er alle Teilnehmer 11, 12 über die Teilnehmeradressen adressieren kann.

In der Konfigurationsphase nimmt der Koordinator 13 eine Verbindung zum zweiten Teilnehmer 12 auf, fragt die zweite Seriennummer ab und speichert diese im nicht-flüchtigen semi-permanenten Speicher 53. Der Koordinator 13 vergleicht die im nicht-flüchtigen semi-permanenten Speicher 53 gespeicherte erste Seriennummer mit der im nicht-flüchtigen semi-permanenten Speicher 53 gespeicherten zweiten Seriennummer und gibt ein Signal ab, wenn die zwei Seriennummern identisch sind. Dieses Signal gibt einen Fehlerfall an.

In einer Ausschaltphase A kann beispielsweise ein Teilnehmer zwischen dem Koordinator 13 und dem ersten Teilnehmer 11 eingefügt werden oder entnommen werden. Der erste Teilnehmer 11 kann somit in der Wiederanlaufphase W eine andere Teilnehmer-Adresse erhalten als in der Konfigurationsphase K. In einer Ausführungsform bildet der erste Teilnehmer 11 und ebenso der Koordinator 13 in der Wiederanlaufphase W die Sicherheitsadresse neu und speichert sie. Die Sicherheitsadresse kann somit in den verschiedenen Betriebsphasen B, B', B" unterschiedlich sein.

Ein Bediener kann auch beispielsweise mittels eines Schalters des Koordinators 13 die Busanordnung 10 zurücksetzen, sodass die Busanordnung 10 wieder mit einer Betriebsphase B, die eine Konfigurationsphase K aufweist, startet. In der Konfigurationsphase K wird die Sicherheitsadresse wieder neu berechnet und gespeichert.

Der Koordinator 13 ist über die erste Signalleitung 17 direkt an den ersten Teilnehmer 11 angeschlossen. Der erste Teilnehmer 11 ist über die zweite Signalleitung 18 direkt an den zweiten Teilnehmer 12 angeschlossen. Entsprechend kann der zweite Teilnehmer 12 über die dritte Signalleitung 19 direkt an einen dritten Teilnehmer angeschlossen sein. Die erste bis zur dritten Signalleitung 17, 18, 19 bilden eine Daisy-Chain. Darüber hinaus ist der Koordinator 13 direkt an alle Teilnehmer 11, 12 über die mindestens eine Busleitung 21 und die weitere Busleitung 22, welche auch als erste und zweite Busleitung bezeichnet werden, angeschlossen.

Die adressierten Teilnehmer 11, 12 werden inklusive Parameter- und Konfigurationsdaten (Seriennummern, Hersteller-Identität) remanent im nicht-flüchtigen semi-permanenten Speicher 53 des Koordinators 13 gespeichert. Über die eindeutige Seriennummer lassen sich zuvor ermittelte Teilnehmer 11, 12 - auch nach Ausfällen - durch den Koordinator 13 wieder ansprechen. Die adressierten Teilnehmer 11, 12 speichern sich ihre Teilnehmer-Adressen nicht remanent ab und verhalten sich nach erneutem Power-up wieder wie zu Beginn.

In einer alternativen Ausführungsform generiert der erste Teilnehmer 11 die Sicherheits-Adresse unter Verwendung der Gleichung:

$$\text{Sicherheits-Adresse} = \text{erste Teilnehmer-Adresse} \cdot N + \text{Koordinator-Adresse,}$$

wobei N ein vorgegebener Wert ist und im nicht-flüchtigen semi-permanenten Speicher 55' des ersten Teilnehmers 11 gespeichert sein kann.

In einer alternativen Ausführungsform generiert der erste Teilnehmer 11 die Sicherheits-Adresse durch Aneinandersetzen der erste Teilnehmer-Adresse und der Koordinator-Adresse. Dabei können die Ziffern der Koordinator-Adresse den Ziffern der Teilnehmer-Adresse vorangestellt werden. Alternativ können die Ziffern der Teilnehmer-Adresse den Ziffern der Koordinator-Adresse vorangestellt werden.

Figur 3 zeigt eine weitere beispielhafte Ausführungsform einer Busanordnung 10, die eine Weiterbildung der in Figuren 1 und 2 erläuterten Busanordnung ist. Die Busanordnung 10 umfasst den Bus 14, den Koordinator 13 und den ersten Teilnehmer 11. Die Busanordnung 10 umfasst ferner einen weiteren Teilnehmer 70, der an den Bus 14 angeschlossen ist. Der weitere Teilnehmer 70 ist zwischen dem Koordinator 13 und dem ersten Teilnehmer 11 angeordnet. Der erste Teilnehmer 11 ist als Sicherheits-Teilnehmer, auch Safety Teilnehmer genannt, implementiert. Der erste Teilnehmer 11 führt eine Sicherheitsanwendung 72 durch. Der erste Teilnehmer 11 wird als Sicherheits-Responder eingesetzt. Der weitere Teilnehmer 70 ist hingegen als Nicht-Sicherheits-Teilnehmer implementiert. Der weitere Teilnehmer 11 führt eine Nicht-Sicherheitsanwendung 73 durch.

Der Koordinator 13 ist als Sicherheits-Koordinator ausgebildet. Der Koordinator 13 kann eine Sicherheits-Speicher-programierbare Steuerung, abgekürzt Sicherheits-SPS, oder Sicherheits-Steuerrelais sein. Der Koordinator 13 führt eine Sicherheitsanwendung 74 und eine Nicht-Sicherheitsanwendung 75 durch. Der Koordinator 13 wird als Sicherheits-Initiator verwendet. Die Ankopplung des Koordinators sowie des ersten und des weiteren Teilnehmers 11, 70 erfolgt über die integrierte Schaltung 45, 46, 76.

Zwischen dem Koordinator 13 und dem ersten Teilnehmer 11 besteht eine sichere Verbindung 77.

Weiter kann die Busanordnung 10 einen Rechner 78 aufweisen. Der Rechner 78 kann zeitweilig oder dauerhaft an den Bus 14 angeschlossen sein. Der Rechner 78 führt die Einrichtung der Sicherheitsanwendung 74 des Koordinators 13 und der Sicherheitsanwendung 72 des ersten Teilnehmers 11 durch. Der Rechner 78 hat somit eine Engineering-Beziehung 79 zu den Sicherheitsanwendungen 72, 74 des ersten Teilnehmers 11 und des Koordinators 13. Dazu verwendet der Rechner 78 die Gerätestammdaten-Dateien 80, abgekürzt GSD-Dateien, des ersten Teilnehmers 11 und des Koordinators 13. Die Gerätestammdaten-Dateien 80 umfassen Sicherheits-Module und Nicht-Sicherheits-Module.

In Figur 3 ist eine Architektur einen sicheren Bussystems 10 gezeigt. Eine als Sicherheits-Koordinator 13 angeschlossene Sicherheits-SPS oder ein Sicherheits-Steuerrelais steuert den an den Bus 14 angeschlossenen sicheren ersten Teilnehmer 11.

Wenn man von Safety Teilnehmern und über die Verwendung von einer eindeutigen Sicherheits-Adresse, englisch Safety Endpoint Adresse, spricht, bezieht man sich auf den Safety Layer, indem die kritischen Punkte näher beschrieben sind. Hier ist es das Tunneln eines Protokolls auf dem Bus 14 oder der Busanordnung 10. Die Konfigurierung und Parametrierung der Safety Connected References, abgekürzt S-CRs, erfolgt durch ein sicherheitsgerichtetes Engineering-Werkzeug. Für jede S-CR werden die S-CR-Parameter durch eine Cyclic Redundancy Check-Signatur, abgekürzt CRC-Signatur, geschützt. Das S-Engineering-Werkzeug berechnet die Signatur und speichert sie im Parametersatz der S-CR. Jeder sicherheitsgerichteter Endpunkt, abgekürzt S-CREP, berechnet nach Erhalt der S-CR-Parameter ebenfalls die Signatur und vergleicht sie mit der im empfangenen Parametersatz enthaltenen Signatur. Nur wenn beide übereinstimmen, darf der empfangene Parameters atz verwendet werden.

Der Bus 14 überträgt in einem Teil der empfangenen und gesendeten Datensektionen eines sicheren Teilnehmers die sogenannte Safety-Protocol Data Units, abgekürzt S-PDUs. Dabei werden zwischen den sicherheitsgerichteten Endpunkten zyklische 1-zu-1-Kommunikationsbeziehungen (S-CR) gebildet. Die Generierung/Auswertung der S-PDUs erfolgt in den sicherheitsgerichteten Endpunkten dieser Beziehungen. Eine S-PDU wird jeweils nur von einem sicherheitsgerichteten Endpunkt des Koordinators/eines Teilnehmers generiert und nur vom korrespondierenden sicherheitsgerichteten Endpunkt eines Teilnehmers/des Koordinators ausgewertet.

In einer alternativen, nicht gezeigten Ausführung ist der Koordinator 13 über einen Feldbus, ein Gateway und den Bus 14 mit dem ersten Teilnehmer 11 gekoppelt. Die sichere Verbindung 77 wird somit über zwei Busse und ein Gateway hinweg aufrechterhalten.

Bezugszeichenliste

| 10 | Busanordnung |
| 11 | erster Teilnehmer |
| 12 | zweiter Teilnehmer |
| 13 | Koordinator |
| 14 | Bus |
| 15, 16 | Prozessorkern |
| 17 | erste Signalleitung |
| 18 | zweite Signalleitung |
| 19 | dritte Signalleitung |
| 20 | Prozessorkern |
| 21 | mindestens eine Busleitung |
| 22 | weitere Busleitung |
| 24, 25, 26 | Transceiver |
| 27 | Versorgungsleitung |
| 28, 29, 30 | Spannungsversorgung |
| 31, 32, 33 | Signalleitungsschaltung |
| 34 | Mikrocontroller |
| 35, 36 | Applikationseinrichtung |
| 42 | Bezugspotentialleitung |
| 45, 46, 47 | integrierte Schaltung |
| 50 | Oszillator |
| 51 | nicht-flüchtiger permanenter Speicher |
| 52 | flüchtiger Speicher |
| 53 | nicht-flüchtiger semi-permanenter Speicher |
| 54 | erster flüchtiger Speicher |
| 55 | erster nicht-flüchtiger permanenter Speicher |
| 55' | erster nicht-flüchtiger semi-permanenter Speicher |
| 56 | zweiter flüchtiger Speicher |
| 57 | zweiter nicht-flüchtiger permanenter Speicher |
| 57' | zweiter nicht-flüchtiger semi-permanenter Speicher |
| 58 | weiterer Transceiver |
| 59 | weiterer Busanschluss |
| 60 | Feldbus |
| 61 | Steuerung |
| 70 | weiterer Teilnehmer |
| 72 | Sicherheitsanwendung |
| 73 | Nicht-Sicherheitsanwendung |
| 74 | Sicherheitsanwendung |
| 75 | Nicht-Sicherheitsanwendung |
| 76 | integrierte Schaltung |
| 77 | sichere Verbindung |
| 78 | Rechner |
| 79 | Engineering-Beziehung |

| | |
|---|---|
| 80 | Gerätestammdaten-Dateien |
| A | Ausschaltphase |
| B, B', B" | Betriebsphase |
| K | Konfigurationsphase |
| t | Zeit |
| W, W' | Wiederanlaufphase |

**Patentansprüche**

1. Busanordnung, umfassend

 - einen Koordinator (13) mit einer Koordinator-Adresse,
 - einen ersten Teilnehmer (11) mit einer ersten Teilnehmer-Adresse und
 - einen Bus (14), der den Koordinator (13) mit dem ersten Teilnehmer (11) koppelt,

 **dadurch gekennzeichnet,**
 **dass** der erste Teilnehmer (11) ausgelegt ist, in einer Konfigurationsphase (K) ein Informationstelegramm vom Koordinator (13) zu empfangen, dem Informationstelegramm die Koordinator-Adresse zu entnehmen und eine Sicherheits-Adresse als Funktion der ersten Teilnehmer-Adresse und der Koordinator-Adresse zu bilden und abzuspeichern.

2. Busanordnung nach Anspruch 1,
 wobei der erste Teilnehmer (11) ausgelegt ist, die Sicherheits-Adresse dadurch zu bestimmen,

 - dass der erste Teilnehmer (11) die Koordinator-Adresse mit einem vorgegebenen Wert M multipliziert und zu dem Produkt die erste Teilnehmer-Adresse addiert, oder
 - dass der erste Teilnehmer (11) die erste Teilnehmer-Adresse mit einem vorgegebenen Wert N multipliziert und zu dem Produkt die Koordinator-Adresse addiert.

3. Busanordnung nach Anspruch 2,
 wobei der vorgegebene Wert M größer als der größte Wert ist, den die erste Teilnehmer-Adresse annehmen kann, beziehungsweise der vorgegebene Wert N größer als der größte Wert ist, den die Koordinator-Adresse annehmen kann.

4. Busanordnung nach einem der Ansprüche 1 bis 3,
 wobei der Koordinator (13) ausgelegt ist, in der Konfigurationsphase die Sicherheits-Adresse als Funktion der ersten Teilnehmer-Adresse und der Koordinator-Adresse zu bilden und abzuspeichern, wobei die vom Koordinator (13) verwendete Funktion identisch zu der vom ersten Teilnehmer (11) verwendeten Funktion ist.

5. Busanordnung nach einem der Ansprüche 1 bis 4,
 wobei der erste Teilnehmer (11) einen ersten nicht-flüchtigen permanenten Speicher (55), in dem eine erste Seriennummer gespeichert ist, umfasst und der Koordinator (13) ausgelegt ist, in der Konfigurationsphase (K) eine Verbindung zum ersten Teilnehmer (11) aufzunehmen, die erste Seriennummer abzufragen und in einem nicht-flüchtigen semi-permanenten Speicher (53) des Koordinators (13) zu speichern.

6. Busanordnung nach Anspruch 5,
 wobei der Koordinator (13) ausgelegt ist, im Informationstelegramm auch die erste Seriennummer zu übertragen, und der erste Teilnehmer (11) ausgelegt ist, die im Informationstelegramm übertragene erste Seriennummer mit der im ersten nicht-flüchtigen permanenten Speicher (55) gespeicherten ersten Seriennummer zu vergleichen und nach Feststellung der Übereinstimmung die Sicherheits-Adresse zu bilden.

7. Busanordnung nach Anspruch 5 oder 6,
 umfassend einen zweiten Teilnehmer (12) mit einer zweiten Seriennummer, wobei der Bus (14) den Koordinator (13) mit dem ersten und dem zweiten Teilnehmer (11, 12) koppelt und der Koordinator (13) ausgelegt ist, in der Konfigurationsphase (K) eine Verbindung zum zweiten Teilnehmer (12) aufzunehmen, die zweite Seriennummer abzufragen und im nicht-flüchtigen semi-permanenten Speicher (53) zu speichern sowie die im nicht-flüchtigen semi-permanenten Speicher (53) gespeicherte erste Seriennummer mit der im nicht-flüchtigen semi-permanenten Speicher (53) gespeicherten zweiten Seriennummer zu vergleichen und ein Signal bereitzustellen, wenn die zwei Seriennummern identisch sind.

8. Busanordnung nach einem der Ansprüche 1 bis 7,
   wobei der Bus (14) eine erste Signalleitung (17), die den ersten Teilnehmer (11) und den Koordinator (13) koppelt, und mindestens eine Busleitung (21) umfasst, die den Koordinator (13) mit dem ersten Teilnehmer (11) verbindet, wobei der Koordinator (13) ausgelegt ist, in der Konfigurationsphase (K) über die erste Signalleitung (17) den ersten Teilnehmer (11) zu aktivieren und über die mindestens eine Busleitung (21) ein Telegramm, das die erste Teilnehmer-Adresse enthält, abzusenden, und
   der erste Teilnehmer (11) ausgelegt ist, die erste Teilnehmer-Adresse in einem ersten flüchtigen Speicher (54) des ersten Teilnehmers (11) zu speichern.

9. Busanordnung nach einem der Ansprüche 1 bis 8,
   wobei der Bus (14) eine zweite Signalleitung (18) umfasst, die einen zweiten Teilnehmer (12) der Busanordnung (10) an den ersten Teilnehmer (11) anschließt, und die mindestens eine Busleitung (21) den Koordinator (13) mit dem ersten und dem zweiten Teilnehmer (11, 12) verbindet, und
   wobei der erste Teilnehmer (11) ausgelegt ist, in der Konfigurationsphase (K) über die zweite Signalleitung (18) den zweiten Teilnehmer (12) zu aktivieren,
   der Koordinator (13) ausgelegt ist, über die mindestens eine Busleitung (21) ein Telegramm, das eine zweite Teilnehmer-Adresse enthält, an den ersten und den zweiten Teilnehmer (11, 12) abzusenden, und
   der zweite Teilnehmer (12) ausgelegt ist, die zweite Teilnehmer-Adresse in einem zweiten flüchtigen Speicher (56) des zweiten Teilnehmers (12) zu speichern.

10. Verfahren zum Betreiben einer Busanordnung,
    wobei die Busanordnung (10) einen Koordinator (13), einen ersten Teilnehmer (11) und einen Bus (14) umfasst, der den Koordinator (13) mit dem ersten Teilnehmer (11) koppelt,
    **dadurch gekennzeichnet,**
    **dass** das Verfahren folgende Schritte umfasst:

    - Empfangen eines von dem Koordinator (13) gesandtes Informationstelegramms durch den ersten Teilnehmer (11) und Entnehmen einer Koordinator-Adresse des Koordinators (13) dem Informationstelegramm in einer Konfigurationsphase (K) und
    - Bilden und abspeichern einer Sicherheits-Adresse durch den ersten Teilnehmer (11) als Funktion einer ersten Teilnehmer-Adresse des ersten Teilnehmers (11) und der Koordinator-Adresse in der Konfigurationsphase (K).

**Claims**

1. Bus arrangement, comprising

   - a coordinator (13) having a coordinator address;
   - a first subscriber (11) having a first subscriber address;
   - a bus (14), which couples the coordinator (13) to the first subscriber, **characterised in that**, the first subscriber (11) is configured to receive an information message from the coordinator (13) in a configuration phase (K), to extract the coordinator address from the information message, and to establish and store a safety address as a function of the first subscriber address and the coordinator address.

2. Bus arrangement according to claim 1,
   wherein the first subscriber (11) is configured to determine the safety address

   - by the first subscriber (11) multiplying the coordinator address by a predetermined value M and adding the first subscriber address to the product, or
   - by the first subscriber (11) multiplying the first subscriber address by a predetermined value N and adding the coordinator address to the product.

3. Bus arrangement according to claim 2,
   wherein the predetermined value M is greater than the largest value which the first subscriber address can assume, or the predetermined value N is greater than the largest value that the coordinator address can assume.

**4.** Bus arrangement according to any one of claims 1 to 3, wherein the coordinator (13) is configured to establish and store in the configuration phase the safety address as a function of the first subscriber address and the coordinator address, wherein the function used by the coordinator (13) is identical to the function used by the first subscriber (11).

**5.** Bus arrangement according to any one of claims 1 to 4, wherein the first subscriber (11) comprises a first non-volatile permanent memory (55) in which a first serial number is stored, and the coordinator (13) is configured, in the configuration phase (K), to establish a connection to the first subscriber (11), to query the first serial number and to store it in a non-volatile semi-permanent memory (53) of the coordinator (13).

**6.** Bus arrangement according to claim 5, wherein the coordinator (13) is configured to also transmit the first serial number in the information message, and the first subscriber (11) is configured to compare the first serial number transmitted in the information message with the first serial number stored in the first non-volatile permanent memory (55), and to establish the safety address after the correspondence has been established.

**7.** Bus arrangement according to claim 5 or 6, comprising a second subscriber (12) having a second serial number, wherein the bus (14) couples the coordinator (13) to the first and second subscribers (11, 12) and the coordinator (13) is configured to establish a connection to the second subscriber (12) in the configuration phase (K), to query the second serial number and store it in the non-volatile semi-permanent memory (53) and compare the first serial number stored in the non-volatile semi-permanent memory (53) with the second serial number stored in the non-volatile semi-permanent memory (53) and to provide a signal when the two serial numbers are identical.

**8.** Bus arrangement according to any one of claims 1 to 7, wherein the bus (14) comprises a first signal line (17) coupling the first subscriber (11) and the coordinator (13), and at least one bus line (21) connecting the coordinator (13) to the first subscriber (11), wherein the coordinator (13) is designed, in the configuration phase (K), to activate the first subscriber (11) by means of the first signal line (17) and to send a message by means of the at least one bus line (21) which contains the first subscriber address, and wherein the first subscriber (11) is configured to store the first subscriber address in a first volatile memory (54) of the first subscriber (11).

**9.** Bus arrangement according to any one of claims 1 to 8, wherein the bus (14) comprises a second signal line (18), which connects a second subscriber (12) of the bus arrangement (10) to the first subscriber (11), and the at least one bus line (21) connects the coordinator (13) to the first and second subscribers (11, 12), and wherein the first subscriber (11) is configured, in the configuration phase (K) to activate the second subscriber (12) via the second signal line (18), the coordinator (13) being configured, via the at least one bus line (21), to send a message, which contains a second subscriber address, to the first and the second subscriber (11, 12), and the second subscriber (12) being configured to store the second subscriber address in a second volatile memory (56) of the second subscriber (12).

**10.** Method for operating a bus arrangement, wherein the bus arrangement (10) comprises a coordinator (13), a first subscriber (11) and a bus (14) which couples the coordinator (13) to the first subscriber (11), **characterised in that** the method comprises the following steps:

- Receipt by the first subscriber (11) of an information message sent by the coordinator (13) and the extraction of a coordinator address of the coordinator (13) from the information message in a configuration phase (K) and
- Establishment and storage of a safety address by the first subscriber (11) as a function of a first subscriber address of the first subscriber (11) and the coordinator address in the configuration phase (K).

**Revendications**

**1.** Agencement de bus, comprenant

- un coordinateur (13) avec une adresse de coordinateur,
- un premier utilisateur (11) avec une première adresse d'utilisateur et

- un bus (14) qui connecte le coordinateur (13) au premier utilisateur (11), **caractérisé en ce que** le premier utilisateur (11) est conçu pour recevoir dans une phase de configuration (K) un télégramme d'information en provenance du coordinateur (13), pour extraire du télégramme d'information l'adresse de coordinateur et pour former une adresse de sécurité en tant que fonction de la première adresse d'utilisateur et de l'adresse de coordinateur et l'enregistrer.

2. Agencement de bus selon la revendication 1, dans lequel le premier utilisateur (11) est conçu pour déterminer l'adresse de sécurité par le fait

   - que le premier utilisateur (11) multiplie l'adresse de coordinateur par une valeur prédéterminée M et ajoute au produit la première adresse d'utilisateur ou
   - que le premier utilisateur (11) multiplie la première adresse d'utilisateur par une valeur N prédéterminée et ajoute au produit l'adresse de coordinateur.

3. Agencement de bus selon la revendication 2, dans lequel la valeur prédéterminée M est supérieure à la plus grande valeur que peut prendre la première adresse d'utilisateur ou la valeur prédéterminée N est supérieure à la plus grande valeur que peut prendre l'adresse de coordinateur.

4. Agencement de bus selon l'une quelconque des revendications 1 à 3, dans lequel le coordinateur (13) est conçu pour, dans la phase de configuration, former l'adresse de sécurité en tant que fonction de la première adresse d'utilisateur et de l'adresse de coordinateur et l'enregistrer, laquelle fonction utilisée par le coordinateur (13) est identique à la fonction utilisée par le premier utilisateur (11).

5. Agencement de bus selon l'une quelconque des revendications 1 à 4, dans lequel le premier utilisateur (11) comprend une première mémoire (55) permanente non volatile dans laquelle un premier numéro de série est mémorisé et le coordinateur (13) est conçu pour, dans la phase de configuration (K), engager une liaison vers le premier utilisateur (11), demander le premier numéro de série et le mémoriser dans une mémoire (53) semi-permanente non volatile du coordinateur (13).

6. Agencement de bus selon la revendication 5, dans lequel le coordinateur (13) est conçu pour transmettre aussi le premier numéro de série dans le télégramme d'information et le premier utilisateur (11) est conçu pour comparer le premier numéro de série transmis dans le télégramme d'information au premier numéro de série mémorisé dans la première mémoire (55) permanente non volatile et pour, après constatation de l'identité, former l'adresse de sécurité.

7. Agencement de bus selon la revendication 5 ou 6, comprenant un deuxième utilisateur (12) avec un deuxième numéro de série, dans lequel le bus (14) connecte le coordinateur (13) au premier et au deuxième utilisateur (11, 12) et le coordinateur (13) est conçu pour, dans la phase de configuration (K), engager une liaison vers le deuxième utilisateur (12), demander le deuxième numéro de série et le mémoriser dans la mémoire (53) semi-permanente non volatile ainsi que comparer le premier numéro de série mémorisé dans la mémoire (53) semi-permanente non volatile au deuxième numéro de série mémorisé dans la mémoire (53) semi-permanente non volatile et fournir un signal si les deux numéros de série sont identiques.

8. Agencement de bus selon l'une quelconque des revendications 1 à 7,
   dans lequel le bus (14) comprend une première ligne de signal (17) qui connecte le premier utilisateur (11) et le coordinateur (13) et au moins une ligne de bus (21) qui relie le coordinateur (13) au premier utilisateur (11),
   dans lequel le coordinateur (13) est conçu pour, dans la phase de configuration (K), activer le premier utilisateur (11) par l'intermédiaire de la première ligne de signal (17) et envoyer par l'intermédiaire de l'au moins une ligne de bus (21) un télégramme qui contient la première adresse d'utilisateur, et
   dans lequel le premier utilisateur (11) est conçu pour mémoriser la première adresse d'utilisateur dans une première mémoire (54) volatile du premier utilisateur (11).

9. Agencement de bus selon l'une quelconque des revendications 1 à 8,
   dans lequel le bus (14) comprend une deuxième ligne de signal (18) qui raccorde un deuxième utilisateur (12) de l'agencement de bus (10) au premier utilisateur (11) et l'au moins une ligne de bus (21) relie le coordinateur (13) au premier et au deuxième utilisateur (11, 12) et
   dans lequel le premier utilisateur (11) est conçu pour, dans la phase de configuration (K), activer le deuxième utilisateur (12) par l'intermédiaire de la deuxième ligne de signal (18),

le coordinateur (13) est conçu pour émettre par l'intermédiaire de l'au moins une ligne de bus (21) un télégramme qui contient une deuxième adresse d'utilisateur vers le premier et le deuxième utilisateur (11, 12) et le deuxième utilisateur (12) est conçu pour mémoriser la deuxième adresse d'utilisateur dans une deuxième mémoire (56) volatile du deuxième utilisateur (12).

10. Procédé de fonctionnement d'un agencement de bus,
dans lequel l'agencement de bus (10) comprend un coordinateur (13), un premier utilisateur (11) et un bus (14) qui connecte le coordinateur (13) au premier utilisateur (11),
**caractérisé en ce que** le procédé comprend les étapes suivantes :

- la réception d'un télégramme d'information, émis par le coordinateur (13), par le premier utilisateur (11) et l'extraction d'une adresse de coordinateur du coordinateur (13) du télégramme d'information dans une phase de configuration (K) et
- la formation et la mémorisation d'une adresse de sécurité par le premier utilisateur (11) en tant que fonction d'une première adresse d'utilisateur du premier utilisateur (11) et de l'adresse de coordinateur dans la phase de configuration (K).

FIG 1

FIG 2

FIG 3

**EP 3 387 798 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2782294 A1